# EUROPÄISCHE PATENTSCHRIFT

(11) **EP 2 905 525 B1**
(45) Veröffentlichungstag und Bekanntmachung des Hinweises auf die Patenterteilung: **01.02.2017**
(21) Anmeldenummer: 15000018.0
(22) Anmeldetag: 07.01.2015
(51) Int. Cl.: F16P 1/06, B23K 26/30

(54) **Anordnung mit zumindest einem Wirkungsbereich für zumindest einen Laser**
Assembly with at least one effective area for at least one laser
Système avec au moins une zone d'action pour au moins un laser

(30) Priorität: 15.01.2014 AT 242014; 26.05.2014 AT 4102014
(43) Veröffentlichungstag der Anmeldung: 12.08.2015
(73) Patentinhaber: Fitz, Martin, 6890 Lustenau (AT); Köhlmeier, Erich, 6971 Hard (AT)
(72) Erfinder: Fitz, Martin, 6890 Lustenau (AT); Köhlmeier, Erich, 6971 Hard (AT)
(74) Vertreter: Fechner, Thomas

(56) Entgegenhaltungen:
- DE-B3-102006 036 500

## Beschreibung

Die vorliegende Erfindung betrifft eine Anordnung mit zumindest einem Wirkungsbereich für zumindest einen Laser und zumindest einem, den Wirkungsbereich zumindest bereichsweise begrenzenden Schutzwandelement zur Absorption und/oder Reflexion von Laserstrahlen, wobei das Schutzwandelement eine oder mehrere Schichten aufweist, und die Schicht oder zumindest eine der Schichten zumindest einen Mineralwollekörper aufweist oder ein Mineralwollekörper ist.

Anordnungen der oben genannten Art dienen dem Zweck, die Sicherheit von Personen in unmittelbarer Nähe des Wirkungsbereichs eines Lasers zu gewährleisten. Z.B. bei der Bearbeitung von Werkstücken durch Laser, welche heutzutage zunehmend mittels Robotersystemen oder Portalanlagen bewegt werden, kann es aufgrund von Fehlfunktionen in der Führung des Laserstrahles oder Störungen der Anlage zu einer Gefährdung von Personen kommen. Neben direkten Laserstrahlen können auch unkontrollierte Reflexionen von Laserstrahlen am zu bearbeitenden Werkstück oder anderen im Wirkungsbereich des Lasers angeordneten Komponenten auftreten.

Zum Schutz von Personen vor schädlicher Laserstrahlung werden Schutzwände verwendet, welche den Austritt von Laserstrahlen aus dem Wirkbereich eines Lasers verhindern sollen oder zumindest eine zeitlich begrenzte Schutzwirkung bieten. Eine derartige Anordnung geht aus der DE 196 29 037 C1 hervor, bei der Schutzwandelemente mit mehreren Schichten aus Metall verwendet werden. Das Absorptionsvermögen der Schichten kann durch Beschichtungen verbessert werden. Aufgrund der Verwendung von Metallen sind die beispielsweise als mobile Wände ausgeführten Schutzwandelemente relativ schwer.

In der DE 10 2006 036 500 B3 ist in Hinblick auf den vorbekannten Stand der Technik im Bereich des Laserschutzes angegeben, dass Mineralwolle als Füllung zwischen zwei Blechen vorgesehen sein kann.

Aufgabe der Erfindung ist es, eine alternative Anordnung zur Abschirmung des Wirkungsbereichs eines Lasers zu realisieren.

Die Erfindung schlägt hierfür bei einer Anordnung der oben genannten Art vor, dass der Mineralwollekörper selbsttragend ausgebildet ist, wobei der Mineralwollekörper gepresste Mineralfasern aufweist, welche mit einem ausgehärteten Bindemittel gebunden sind.

Unter dem Wirkungsbereich eines Lasers wird im Rahmen dieser Schrift der Bereich verstanden, in welchen ein Laser im Betriebszustand Laserstrahlen ausstrahlt, sei es nun direkt oder über eine oder mehrere Reflexionen. Dieser Wirkungsbereich könnte auch als Arbeitsbereich des Lasers bezeichnet werden. In bevorzugten Ausführungsformen ist vorgesehen, dass die Anordnung zumindest einen Laser aufweist, welcher sich im Wirkungsbereich befindet und im Betriebszustand Laserstrahlen in den Wirkungsbereich ausstrahlt. Es ist auch denkbar und möglich, dass sich mehrere Laser der Anordnung im Wirkungsbereich befinden, welche im Betriebszustand Laserstrahlen in den Wirkungsbereich ausstrahlen. Die erfindungsgemäße Anordnung ist dabei insbesondere für Typen von Lasern vorgesehen, deren Leistung zur Bearbeitung von Materialien, insbesondere Metallen, ausreicht. Typische Bearbeitungsschritte mittels Laser sind der Materialabtrag, wie z.B. das Trennen von Werkstücken, oder das Fügen von Werkstücken, insbesondere das Schweißen von Metallen. Diese Laser sind in der Regel so stark, dass ihr Laserstrahl ein hohes Gefährdungspotential für das in der Umgebung beschäftigte Bedienpersonal hat.

Das erfindungsgemäße Schutzwandelement wird dort angeordnet, wo der Wirkungsbereich des Lasers begrenzt werden soll, also z.B. um den Eintritt von Laserstrahlen in den hinter dem Schutzwandelement liegenden Bereich zumindest für eine gewisse Zeit zu verhindern. Das Schutzwandelement kann dabei ein Wandelement, ein Bodenelement oder auch ein Deckenelement sein. Oft wird die Anordnung auch mehrere Schutzwandelemente zur Begrenzung des Wirkungsbereiches aufweisen.

Der Mineralwollekörper ist grundsätzlich einmal ein Körper der Mineralwolle, vorzugsweise gleichmäßig verteilt, enthält. Er ist vorzugsweise als Platte ausgebildet. Es handelt sich beim Mineralwollekörper um ein im Wesentlichen ebenes Bauteil, welches in sich steif, oder in anderen Worten selbsttragend, ausgeführt ist. Der Mineralwollekörper weist gepresste Mineralfasern auf, welche, zur Erlangung der selbsttragenden Eigenschaften, mit dem aushärtbaren bzw. ausgehärteten Bindemittel gebunden sind.

Die Dichte des Mineralwollekörpers beträgt vorzugsweise mehr als 800 kg/m³, besonders bevorzugt mehr als 1.100 kg/m³. Gegenüber den aus dem Stand der Technik bekannten Stahlplatten ergibt sich daher ein Gewichtsvorteil, welcher insbesondere bei flexibel anordenbaren, mobilen Schutzwandelementen vorteilhaft ist.

Mineralwollekörper, welche als Fassadentafeln oder -platten im Bauwesen bekannt sind, können als Mineralwollekörper zur Ausbildung der Erfindung eingesetzt werden. Bevorzugt handelt es sich bei den Mineralwollekörpern um nicht-brennbare Platten.

In bevorzugten Ausführungsformen ist vorgesehen, dass der Mineralwollekörper Basalt aufweist. In diesem Zusammenhang ist es besonders bevorzugt, wenn der gesamte Mineralanteil des Mineralwollekörpers aus Basalt besteht. Es ist auch denkbar und möglich, andere Mineralfasern, beispielsweise Glasfasern oder andere Steinfasern wie z.B. Feldspat, Dolomit etc. zu verwenden. Die Materialstärke bzw. Dicke des Mineralwollekörpers beträgt vorzugsweise mindestens 4 mm, vorzugsweise mindestens 8 mm. Der Mineralwollekörper ist in der erfindungsgemäßen Anordnung günstigerweise so angeordnet, dass die Richtung der genannten Dicke bzw. Materialstärke parallel oder zumindest spitzwinklig zu der zu erwartenden Hauptrichtung, aus der die Laserstrahlen kommen können, angeordnet ist.

Grundsätzlich ist es denkbar, dass das Schutzwandelement nur eine Schicht aufweist, welche einen Mineralwollekörper aufweist oder ein Mineralwollekörper ist. In anderen Worten kann das Schutzwandelement aus einer Schicht Mineralwollekörper bestehen.

Bevorzugt ist vorgesehen, dass das Schutzwandelement zumindest zwei Schichten aufweist, wobei bevorzugt zwischen den oder zumindest zwei der Schichten ein, vorzugsweise luftgefüllter, Zwischenraum angeordnet ist. Vorteilhafterweise ist vorgesehen, dass die Breite des Zwischenraums mindestens 10 mm, vorzugsweise mindestens 60 mm, beträgt. Es ist somit in anderen Worten in bevorzugten Ausführungsformen vorgesehen, dass die zumindest zwei benachbarten Schichten beabstandet voneinander angeordnet sind. In anderen Ausführungsformen könnte auch vorgesehen sein, dass benachbarte Schichten direkt aneinander angrenzen.

Bei Ausführungsformen mit mehreren Schichten kann vorgesehen sein, dass alle diese Schichten Mineralwollekörper aufweisen oder sind. Natürlich ist auch denkbar und möglich, dass nur eine Anzahl von Schichten, die kleiner als die Gesamtanzahl von Schichten ist, Mineralwollekörper aufweist oder daraus besteht.

Bevorzugte Ausführungsformen sehen vor, dass zumindest eine der Schichten des Schutzwandelementes Metall aufweist, oder daraus besteht. Es ist in anderen Worten vorzugsweise vorgesehen, dass das Schutzwandelement zusätzlich zum zumindest einen Mineralwollekörper eine Schicht aus Metall aufweist. Beim Metall kann es sich beispielsweise um Eisenlegierungen, beispielsweise Stahl, Aluminium, Kupfer oder andere aus dem Stand der Technik an sich bekannte Metalle handeln.

Die Schicht oder die Schichten aus Metall können insbesondere zur Aufnahme von Energie dienen, welche beim Auftreffen von Laserstrahlen von diesen Schichten absorbiert und aufgrund der guten Wärmeleitfähigkeit von Metallen, von diesen Schichten gut in Form von Wärme abgeleitet werden kann. Die Materialstärke der Schicht oder der Schichten aus Metall beträgt dabei günstigerweise mindestens 0,5 mm, vorzugsweise mindestens 1,5 mm.

Anhand der Anzahl und der Ausführung von Schichten des Schutzwandelementes, z.B. als Schichten aus oder mit Metall oder Mineralwollekörper, kann ein dem jeweiligen Verwendungszweck angepasstes Schutzwandelement hergestellt werden. Insbesondere bei Verwendung leistungsschwächerer Laser kann beispielsweise ausschließlich eine einzige Schicht aus oder mit Mineralwolle ausreichen. Z.B. durch einen entsprechenden mehrschaligen Aufbau können Schutzwandelemente für leistungsstarke Laser mit mehreren Kilowatt Leistung bereitgestellt werden.

In bevorzugten Ausführungsformen kann vorgesehen sein, dass die Schicht aus Metall oder eine der Schichten aus Metall dem Wirkungsbereich des Lasers direkt zugewandt ist. In anderen Worten ist dann vorgesehen, dass die innerste Wand des Schutzwandelementes, welche vom Laser aus gesehen vor den anderen Schichten des Schutzwandelementes angeordnet ist, Metall aufweist oder daraus besteht. Die Metallwand kann auch tragende Funktion haben, z.B. indem an ihr, insbesondere in der Nähe des Wirkungsbereichs bzw. im Wirkungsbereich für den Betrieb des Lasers benötigte, Komponenten angebaut werden.

Es ist auch denkbar und möglich, dass der zumindest eine Mineralwollekörper dem Wirkungsbereich des Lasers direkt zugewandt ist. Es ist dann in anderen Worten vorgesehen, dass die innerste Schicht des Schutzwandelementes, welche vom Laser aus gesehen vor den anderen Schichten des Schutzwandelementes angeordnet ist, ein Mineralwollekörper ist oder einen solchen zumindest aufweist.

Bei einem mehrschichtigen Aufbau des Schutzwandelementes kann es bei ausreichender Leistung eines darauf auftreffenden Laserstrahls zu einem Durchschuss der innersten Wand des Schutzelementes kommen. In bevorzugten Ausführungsformen ist vorgesehen, dass es dann an Schichten, welche vom Laser ausgesehen hinter der durchschossenen Schicht angeordnet sind, Reflexionen auftreten, welche eine flächige Verteilung bzw. Abschwächung der Intensität des Laserstrahls bewirken. Es ist auch denkbar und möglich, dass die hinter der durchschossenen Schicht angeordnete Schicht zumindest einen Großteil der Energie des Laserstrahls absorbiert.

In besonderen Ausführungsformen ist es möglich, dass zumindest eine der Schichten eine, insbesondere gut reflektierende Beschichtung aufweist. Diese Schicht könnte beispielsweise eine zusätzliche Metallbeschichtung, beispielsweise eine verzinkte Oberfläche aufweisen. Es ist auch denkbar, den Mineralwollekörper oder die Schicht aus Metall mit farbigen Lacken oder Folien zu beschichten, um die Absorptions- oder Reflexionseigenschaften der Schichten zu beeinflussen.

Besonders bevorzugte Ausgestaltungsformen der Erfindung sehen vor, dass die Anordnung eine Laserschutzkabine ist, wobei der Wirkungsbereich für den Laser in einem Innenraum der Laserschutzkabine angeordnet ist. Es kann dann vorgesehen sein, dass der Wirkungsbereich für den Laser vollständig von Schutzwandelementen umgeben ist. Es ist also auch denkbar und möglich, dass zumindest eines der Schutzwandelemente den Wirkungsbereich des Lasers in einer von einem Hallenboden weg gerichteten Richtung nach oben als Decke oder auch nach unten als Boden begrenzt. Es ist auch denkbar und möglich, dass die Laserschutzkabine den Wirkungsbereich des Lasers nur teilweise umgibt bzw. begrenzt.

Die Erfindung sieht ferner auch die Verwendung eines Mineralwollekörpers zum Abschirmen von Laserstrahlen vor, wobei der Mineralwollekörper zumindest eine Schicht eines Schutzwandelementes einer erfindungsgemäßen Anordnung bildet.

Des Weiteren sieht die Erfindung die Verwendung eines Mineralwollekörpers zum Abschirmen von Laserstrahlen vor, wobei die Laserstrahlen in einem Auftreffbereich des Mineralwollekörpers auf diesen auftreffen und der Mineralwollekörper im Auftreffbereich zumindest an einer Oberfläche des Mineralwollekörpers von den Laserstrahlen zumindest teilweise aufgeschmolzen wird. Durch die Einwirkung der Laserstrahlen wird der Mineralwollekörper dabei günstigerweise in eine Schmelze umgewandelt. Günstigerweise ist vorgesehen, dass der Mineralwollekörper eine im Vergleich zu gegebenenfalls vorhandenen Schichten aus Metall wesentlich schlechtere Wärmeleitfähigkeit aufweist. Dadurch entspricht der Bereich des aufgeschmolzenen Anteils des Mineralwollekörpers meist in seiner Ausdehnung in Bezug auf die Oberfläche des Mineralwollekörpers im Wesentlichen der Ausdehnung des Auftreffbereichs.

In bevorzugten Ausgestaltungsformen der Erfindung ist vorgesehen, dass eine Aufschmelztiefe, in der der Mineralwollekörper in einem Aufschmelzvorgang von den Laserstrahlen aufgeschmolzen wird, kleiner ist als die Dicke des Mineralwollekörpers. Die Aufschmelztiefe und die Dicke des Mineralwollekörpers werden dabei günstigerweise in Richtung normal auf die Oberfläche des Mineralwollekörpers im Auftreffbereich des Laserstrahls gemessen bzw. bestimmt.

In besonders bevorzugten Ausgestaltungsformen der Erfindung ist vorgesehen, dass das aufgeschmolzene Material des Mineralwollekörpers abtropft. In weiterer Folge kann dann in einem weiteren Aufschmelzvorgang die nächste Schicht des Mineralwollekörpers von den Laserstrahlen aufgeschmolzen werden. Dieser Aufschmelzvorgang des Mineralwollekörpers kann somit eine Art iterativen Schmelzprozess darstellen. In anderen Worten ist also vorzugsweise vorgesehen, dass nur ein Bruchteil der Dicke des Mineralwollekörpers im Auftreffbereich in einem Aufschmelzvorgang aufgeschmolzen wird, wobei das abtropfende, aufgeschmolzene Material eine beträchtliche Wärmeabfuhr bewirken kann. In weiterer Folge kann dann die freigelegte Oberfläche des noch festen Mineralwollekörpers im Auftreffbereich in einem nachfolgenden Aufschmelzvorgang aufgeschmolzen werden. Der iterative Schmelzprozess ermöglicht eine besonders hohe Standzeit des Schutzwandelementes. Bei relativ dünnen Mineralwollekörpern und/oder entsprechend starken Lasern könnte dieser auch in einem einzigen Aufschmelzvorgang über die gesamte Dicke des Mineralwollekörpers aufgeschmolzen werden.

Die beschriebene Verwendung könnte auch als Verfahren bezeichnet werden.

Die erfindungsgemäße Anordnung ist, bei entsprechender Ausführung als Schutz bei Laserbearbeitungsmaschinen mit Lasern mit einer Leistung von bis zu 8 kW und mehr geeignet.

Weitere Merkmale und Einzelheiten der Erfindung werden nachfolgend anhand einiger bevorzugter Ausführungsbeispiele geschildert. Dabei zeigen:
Fig. 1 einen Querschnitt einer ersten erfindungsgemäßen Anordnung mit einem Mineralwollekörper;
Fig. 2 eine zweites Ausführungsform der erfindungsgemäßen Anordnung gemäß Fig. 1 mit einem zweiten Mineralwollekörper;
Fig. 3 eine dritte Ausführungsform der erfindungsgemäßen Anordnung gemäß Fig. 1, mit einer Schicht aus Metall;
Fig. 4 eine weitere Ausführungsform der erfindungsgemäßen Anordnung gemäß Fig. 3, wobei die Schicht aus Metall und der Mineralwollekörper in ihrer Anordnung vertauscht sind;
Fig. 5 eine Ausführungsform der erfindungsgemäßen Anordnung mit drei Schichten;
Fig. 6 eine Ausführungsform der erfindungsgemäßen Anordnung mit sechs Schichten und
Fig. 7 bis 10 den Vorgang des Aufschmelzens eines Mineralwollekörpers gemäß einer erfindungsgemäßen Verwendung.

Die in den Figuren gezeigten erfindungsgemäßen Anordnungen 1 sind schematisch und nicht maßstäblich dargestellt. Sie dienen insbesondere der Veranschaulichung der Erfindung. In den Figuren ist ein Teil eines Wirkungsbereichs 2 dargestellt, in welchem sich ein Laser 3 befindet, welcher im Betriebszustand Laserstrahlen 5 in den Wirkungsbereich 2 ausstrahlt. Der Laser 3 kann beweglich z.B. an einem Roboterarm befestigt sein.

Der Laser 3 ist symbolhaft und ebenfalls nicht maßstabsgetreu in Form einer Laseroptik dargestellt. Die Brennweite 10 beschreibt den Abstand des Bereichs der höchsten Intensität des Laserstrahls 5, in welchem der Laserstrahl 5 gebündelt ist, von der Laseroptik des Lasers 3. Der Abstand 11 beschreibt den Abstand des Schutzwandelementes 4 von Bereich der maximalen Intensität des Laserstrahls 5, in Verlängerung der strichpunktiert eingezeichneten Hauptachse des Laserstrahls 5. Abweichend von den gezeigten Beispielen kann das Schutzwandelement 4 natürlich auch mit einem Abstand kleiner oder gleich der Brennweite 10 vom Laser 3 aufgestellt sein. Der Laser 3 bzw. der aus dem Laser 3 ausgestrahlte Laserstrahl 5 kann von einem Roboter oder einem Portalsystem geführt sein, wobei der Abstand zwischen Laser 3 und Schutzwandelement 4 bei Bewegung des Lasers 3 entsprechend variiert. Das Schutzwandelement 4 begrenzt den Wirkungsbereich 2 im Ausführungsbeispiel auf einer Seite. Es ist natürlich denkbar und möglich, dass die Anordnung 1 eine Laserschutzkabine ist, wobei der Wirkungsbereich 2 für den Laser 3 in einem Innenraum der Laserschutzkabine angeordnet ist. In diesem Fall können die Schutzwandelemente 4 den Wirkungsbereich beispielsweise im Grundriss der Laserschutzkabine gesehen und/oder auch nach unten und/oder oben vollständig oder auch teilweise umgeben.

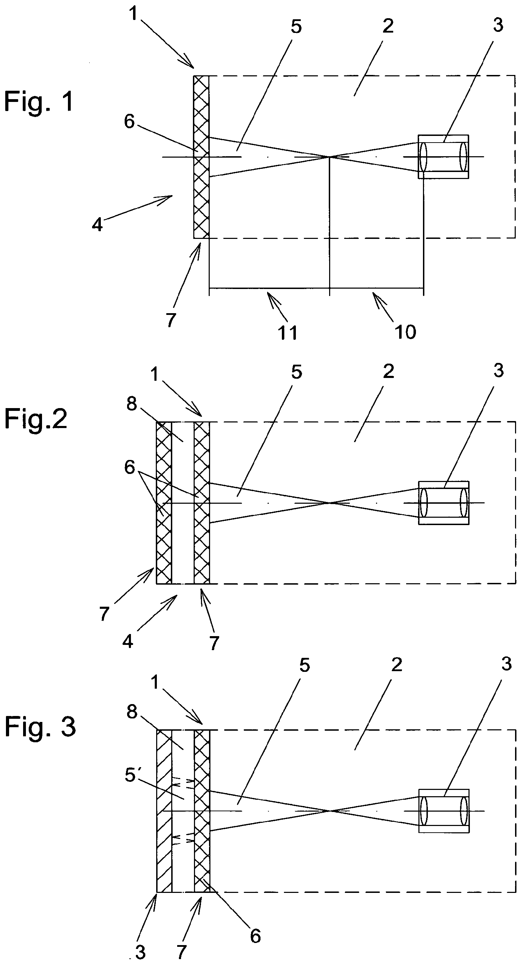

Im ersten Ausführungsbeispiel, vgl. Fig. 1, weist das Schutzwandelement 4 genau eine Schicht 7 auf, welche ein Mineralwollekörper 6 ist. Der Mineralwollekörper 6 ist plattenförmig ausgebildet und selbsttragend. Der Mineralwollekörper 6 weist gepresste Basaltpartikel auf, welche mit Bindemittel gebunden ist. Auch andere Ausführungen sind, wie weiter vorne erwähnt, möglich. Derartige Mineralwollekörper 6 werden so oder in ähnlicher Form z.B. als Fassadenplatte im Bauwesen zur Verkleidung von Gebäuden verwendet. Mineralwolle ist für ihre guten Brandschutzeigenschaften bekannt und eignet sich daher besonders für den Einsatz in Bereichen, in denen hohe Temperaturen auftreten können oder beispielsweise Laser 3 verwendet werden. Der Mineralwollekörper 6 kann evtl. auch nur eine begrenzte Standzeit gegen darauf einfallende Laserstrahlen 5 aufweisen. Die Standzeit ist dabei unter anderem abhängig vom Abstand 11 und der Leistung des verwendeten Lasers 3. Die Anordnung gemäß dem ersten Ausführungsbeispiel ist daher insbesondere für Anwendungen mit leistungsschwächeren Lasern 3 geeignet.

Um die Standzeit des Schutzwandelementes 4 zu erhöhen, weist das Schutzwandelement 4 in bevorzugten Ausführungsformen zumindest zwei Schichten 7, 13 auf, wobei zumindest eine der Schichten 7 ein Mineralwollekörper 6 ist. Die Ausführungsbeispiele 2 bis 4 zeigen Varianten mit jeweils zwei Schichten 7, 13.

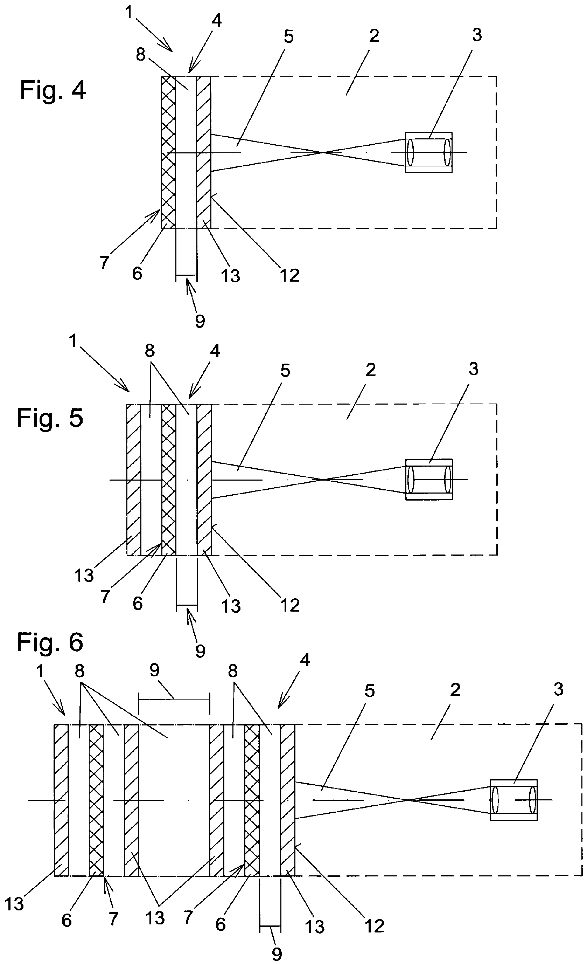

Im zweiten Ausführungsbeispiel, vgl. Fig. 2, weist das Schutzwandelement 4 zwei Schichten 7 auf, welche Mineralwollekörper 6 sind. In den in Fig. 3 und 4 dargestellten Ausführungsbeispielen besteht eine Schicht 13 der Schichten 7, 13 des Schutzwandelementes 4 aus Metall. Der Unterschied zwischen den in Fig. 3 und Fig. 4 dargestellten Ausführungsformen besteht darin, dass in Fig. 3 die Schicht 13 aus Metall den Wirkungsbereich 2 des Lasers 3 direkt begrenzt bzw. diesem zugewandt ist. Im vierten Ausführungsbeispiel, vgl. Fig. 4, wird der Wirkungsbereich 2 des Lasers 3 von einem Mineralwollekörper 6 direkt begrenzt, ist also dem Laser 3 direkt zugewandt.

Durch den mehrschichtigen Aufbau des Schutzwandelementes 4 wird eine höhere Schutzwirkung erreicht. Im Falle des Durchdringens bzw. Durchbrennens der aus Sicht des Lasers 3 gesehen, näher beim Laser 3 angeordneten Schicht 7 bzw. 13 ist noch eine redundante Schicht 7 bzw. 13 vorhanden, welche ein Austreten eines Laserstrahls 5 auf der vom Wirkungsbereich 2 des Lasers 3 abgewandten Seite des Schutzwandelementes 4 verhindert.

In den Ausführungsbeispielen gemäß der Fig. 2 bis 4 ist zwischen den zwei Schichten 7 bzw. 13 jeweils ein luftgefüllter Zwischenraum 8 angeordnet. Die Breite 9 des Zwischenraums 8 beträgt dabei günstigerweise mindestens 10 mm, vorzugsweise mindestens 60 mm. Die Breite 9 des Zwischenraums 8 bzw. der Abstand von benachbarten Schichten 7 bzw. 13 bewirkt, dass die vom Laser 3 aus gesehen hinter der anderen Wand angeordnete Schicht 7 bzw. 13 durch eine geringere Intensität des Laserstrahls 5 beaufschlagt wird, da der Abstand vom Bereich höchster Intensität (=Brennpunkt) des Laserstrahls 5 zunimmt.

In Fig. 3 ist ein durch den Mineralwollekörper 6 hindurchgetretener Laserstrahl 5' gezeigt, welcher an der zum Laser 3 zugewandten Seite der Schicht 13 aus Metall zum Mineralwollekörper 6 zurückreflektiert wird. Im Ausführungsbeispiel wird ein Teil der Energie des Laserstrahls 5' vom Mineralwollekörper 6 absorbiert. Und zwar auf der Seite des Mineralwollekörpers 6, welche dem Laser 3 abgewandt ist. Im dritten Ausführungsbeispiel wird der Laserstrahl 5' zumindest zum Teil wieder von der dem Laser 3 abgewandten Seite des Mineralwollekörpers 6 auf die Schicht 13 aus Metall zurückreflektiert. Der Laserstrahl 5' verliert dabei mit zunehmendem Abstand vom Durchtrittsort des Laserstrahls 5 durch den Mineralwollekörper 6 an Intensität. Es ist auch denkbar, dass der reflektierte Anteil des Laserstrahls 5' an der dem Laser 3 abgewandten Seite des Mineralwollekörpers 6 durch eine farbige Beschichtung minimiert wird und der Laserstrahl 5' zum überwiegenden Teil vom Mineralwollekörper 6 absorbiert wird. Genauso gut kann durch eine entsprechende Beschichtung auf dieser Seite des Mineralwollekörpers 6 der reflektierte Anteil auch erhöht werden. In dieser Form kann also allgemein gesteuert werden, ob die Intensität des Laserstrahls mehr durch Absorption oder mehr durch Dispersion abgebaut wird.

In Fig. 4 besitzt die Schicht 13 aus Metall eine Beschichtung 12, welche die Absorptionseigenschaften der Schicht 13 aus Metall erhöht. Die Beschichtung 12 könnte beispielsweise aus einer Farbschicht, welche durch einen Lackiervorgang aufgetragen wurde, bestehen. Auch andere an sich bekannte Methoden zur Beschichtung von Metallen können angewandt werden, beispielsweise die Beschichtung mit Folien etc. Es ist allgemein bekannt, dass beispielsweise ein schwarzer Anstrich die Fähigkeit zur Absorption von Strahlung erhöht.

In den bisher erläuterten Ausführungsbeispielen ist neben einem einschichtigen Aufbau entsprechend Fig. 1 ein zweischichtiger Aufbau des Schutzwandelementes 4 gezeigt. Es ist natürlich je nach Anforderung möglich, die Anzahl der Schichten 7, 13 des Schutzwandelementes 4 noch weiter zu erhöhen, wobei weitere Schichten 13 aus Metall und/oder Schichten 7, welche Mineralwollekörper 6 aufweisen oder sind, in nahezu beliebiger Anzahl, mit oder ohne Abstand benachbarter Schichten 7, 13 zueinander, hinzugefügt werden können.

In den Fig. 5 und 6 sind Schutzwandelemente 4 gezeigt, welche sich insbesondere zur Abschirmung von leistungsstarken Lasern 3 eignen.

Im Unterschied zum in Fig. 4 gezeigten Ausführungsbeispiel besitzt das Schutzwandelement 4 gemäß Fig. 5 eine zusätzliche Schicht 13 aus Metall an der vom Wirkungsbereich 2 des Lasers 3 abgewandten Seite des Schutzwandelementes 4. Die beiden Schichten 13 sind jeweils beabstandet von der Schicht 7, welche einen Mineralwollekörper 6 aufweist oder daraus besteht, angeordnet. Es könnte auch vorgesehen sein, dass eine der beiden Schichten 13 oder beide Schichten 13 aus Metall ohne Abstand zur benachbarten Schicht 7 angeordnet sind. Auch bei diesem und dem folgenden Ausführungsbeispiel können die Schichten 13 aus Metall je nach Anforderung beschichtet sein, um die Fähigkeit zur Absorption oder Reflektion von Strahlung je nach Anforderung zu erhöhen bzw. zu verringern. Das gezeigte Schutzwandelement 4 besitzt bereits aufgrund des dreischichtigen Aufbaus eine erhöhte Standzeit gegenüber den in den Figuren 3 und 4 gezeigten Ausführungsbeispielen. Diese kann durch eine reflektierende Beschichtung der zum Laser 3 zugewandten Seite der weiter entfernt vom Laser 3 angeordneten Schicht 13 noch weiter gesteigert werden.

Das in Fig. 6 dargestellte Schutzwandelement 4 weist insgesamt sechs Schichten 7 bzw. 13 auf. Der Aufbau des Schutzwandelementes 4 entspricht im Wesentlichen einer Hintereinanderreihung von zwei Schutzwandelementen 4 gemäß dem vorigen Ausführungsbeispiel entsprechend der Fig. 5. Aus Sicht des Lasers 3 gesehen, besteht das Schutzwandelement 4 aus einer ersten Schicht 13 aus Metall, einer ersten Schicht 7, welche einen Mineralwollekörper 6 aufweist oder daraus besteht, einer zweiten Schicht aus Metall 13, einer dritten Schicht 13 aus Metall, einer zweiten Schicht 7, welche einen Mineralwollekörper 6 aufweist oder daraus besteht, und einer auf der vom Wirkungsbereich 2 des Lasers 3 abgewandten Seite des Schutzwandelementes 4 angeordneten vierten Schicht 13 aus Metall. Der Abstand 9 zwischen den unmittelbar benachbarten Schichten 13 aus Metall ist in bevorzugten Ausführungsformen größer als der Abstand 9 zwischen den jeweiligen Schichten 7 und 13 des Schutzwandelementes 4. Es ist natürlich denkbar und möglich, dass der Abstand 9 zwischen den jeweiligen Schichten 7 und 13 je nach Anforderung variiert werden kann, wie dies weiter oben bereits ausgeführt wurde.

In den Ausführungsbeispielen könnten die gegebenenfalls vorhandenen Schichten 13 des Schutzwandelements 4 dem einfachen Anbau von Vorrichtungen dienen. Beispielsweise könnten an der dem Laser 3 nächstliegenden Schicht 13 und/oder an der vom Laser 3 am weitesten entfernt liegenden Schicht 13 Vorrichtungen, insbesondere Haken, Ablagen, Rohrbefestigungen für Versorgungsleitungen usw., befestigbar sein.

Die bevorzugten Materialstärken der optionalen Schicht(en) 13 aus Metall und des zumindest einen Mineralwollekörpers 6 sind weiter oben angeführt.

In den Ausführungsbeispielen sind die Schichten 7, 13 des Schutzwandelementes 4 gezeigt, welche vorzugsweise an einer nicht dargestellten, an und für sich bekannten, Rahmenkonstruktion, z.B. aus Stahl- oder Aluminiumprofilen angebracht sein können. Die Befestigung des Schutzwandelementes 4 kann dabei mittels an und für sich bekannten Befestigungsmitteln lösbar oder unlösbar ausgeführt sein. Die Schutzwandelemente 4 können auch so steif und stabil ausgeführt sein, dass sie freistehend bzw. freitragend aufgebaut werden können. Auch mobile Ausführungsformen in Form von Stellwänden mit auf Rollen beweglichen Schutzwandelementen 4 sind denkbar und möglich.

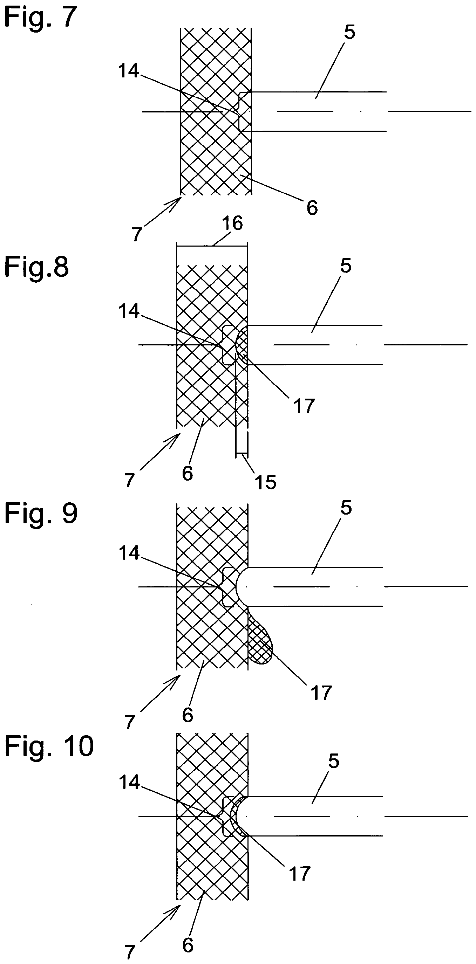

In den Fig. 7 bis 10 wird der bevorzugte Ablauf des Abschmelzens des Mineralwollekörpers 6 beim Auftreffen von Laserstrahlen 5 gezeigt. Dabei ist insbesondere das Aufschmelzverhalten des Mineralwollekörpers 6 an sich von Interesse, weshalb lediglich dieser dargestellt ist. Auf die Darstellung von Schichten 13 aus Metall wurde daher verzichtet. Das Prinzip gilt analog für sämtliche hier gezeigten Ausführungen von Schutzwandelementen 4 mit zumindest einem Mineralwollekörper 7.

Die Fig. 7 zeigt die Ausgangssituation bevor es zu einem Aufschmelzen des Mineralwollekörpers 6 infolge des Auftreffens der energiereichen Laserstrahlen 5 kommt. Durch fortdauerndes Einwirken der Laserstrahlen 5 auf den Mineralwollekörper 6 wird dieser im Auftreffbereich 14 zumindest an einer Oberfläche von den auftreffenden Laserstrahlen 5 aufgeschmolzen. Das aufgeschmolzene Material 17 des Mineralwollekörpers 6 könnte dabei auch als Schmelze bezeichnet werden. Der Mineralwollekörper 6 wird also lokal durch Einwirken von Laserstrahlen 5 verflüssigt, vgl. Fig. 8.

Die Aufschmelztiefe 15, in der der Mineralwollekörper 6 in einem Aufschmelzvorgang von den Laserstrahlen 5 aufgeschmolzen wird, ist günstigerweise kleiner als die Dicke 16 des Mineralwollekörpers 6. Sowohl die Dicke 16 des Mineralwollekörpers 6, als auch die Aufschmelztiefe 15 werden günstigerweise in einer Richtung normal auf die Oberfläche des Mineralwollekörpers 6 im Auftreffbereich 14 gemessen bzw. bestimmt. Erreicht das aufgeschmolzene Material 17 eine entsprechend hohe Temperatur, so tropft das aufgeschmolzene Material 17 ab und verlässt den Auftreffbereich 14 des Mineralwollekörpers 6. Im Auftreffbereich 14 des Mineralwollekörpers 6 wird das im Auftreffbereich 14 aus Sicht des Lasers 3 vom aufgeschmolzenen Material 17 vorher verdeckte Material des Mineralwollekörpers 6 durch das Abtropfen des aufgeschmolzenen Materials 17 freigelegt.

In weiterer Folge wird der Mineralwollekörper 6 durch Einwirken der Laserstrahlen 5 in einem nachfolgenden Aufschmelzvorgang wiederum an der Oberfläche des Mineralwollekörpers 6 von den Laserstrahlen 5 aufgeschmolzen. Der Schritt des Abtropfens des aufgeschmolzenen Materials 17 und des erneuten Aufschmelzens an der Oberfläche des Mineralwollekörpers 6 im Auftreffbereich 14 ist in den Fig. 9 und 10 ersichtlich. In anderen Worten muss sich der auftreffende Laserstrahl 5 in einem iterativen Schmelzprozess durch den Mineralwollekörper 6 hindurcharbeiten. Das abtropfende, aufgeschmolzene Material 17 des Mineralwollekörpers 6 verlässt vor dem nachfolgenden Aufschmelzvorgang den unmittelbaren Auftreffbereich 14 des Laserstrahls 5, wodurch eine vorteilhafte Wärmeabfuhr durch abtropfendes, aufgeschmolzenes Material 17 des Mineralwollekörpers 6 auf dem Auftreffbereich 14 stattfindet. Aufgrund der schlechten Wärmeleiteigenschaften des Mineralwollekörpers 6 bleibt die lokale Einwirkung der Laserstrahlen 5 in der Regel im Wesentlichen auf den Auftreffbereich 14 des Mineralwollekörpers 6 beschränkt.

### Legende zu den Hinweisziffern:

- 1: Anordnung
- 2: Wirkungsbereich
- 3: Laser
- 4: Schutzwandelement
- 5, 5': Laserstrahl
- 6: Mineralwollekörper
- 7: Schicht
- 8: Zwischenraum
- 9: Breite
- 10: Brennweite
- 11: Abstand
- 12: Beschichtung
- 13: Schicht
- 14: Auftreffbereich
- 15: Aufschmelztiefe
- 16: Dicke
- 17: aufgeschmolzenes Material

## Patentansprüche

1. Anordnung (1) mit zumindest einem Wirkungsbereich (2) für zumindest einen Laser (3) und zumindest einem, den Wirkungsbereich (2) zumindest bereichsweise begrenzenden Schutzwandelement (4) zur Absorption und/oder Reflexion von Laserstrahlen (5), wobei das Schutzwandelement (4) eine oder mehrere Schichten (7, 13) aufweist, und die Schicht (7) oder zumindest eine der Schichten (7) zumindest einen Mineralwollekörper (6) aufweist oder ein Mineralwollekörper (6) ist, **dadurch gekennzeichnet, dass** der Mineralwollekörper (6) selbsttragend ausgebildet ist, wobei der Mineralwollekörper (6) gepresste Mineralfasern aufweist, welche mit einem ausgehärteten Bindemittel gebunden sind.

2. Anordnung (1) nach Anspruch 1, **dadurch gekennzeichnet, dass** das Schutzwandelement (4) zumindest zwei Schichten (7, 13) aufweist, wobei zwischen den oder zumindest zwei der Schichten (7, 13) ein, vorzugsweise luftgefüllter, Zwischenraum (8) angeordnet ist.

3. Anordnung (1) nach Anspruch 1 oder 2, **dadurch gekennzeichnet, dass** zumindest eine der Schichten (13) des Schutzwandelementes (4) Metall aufweist, oder daraus besteht.

4. Anordnung (1) nach Anspruch 3, **dadurch gekennzeichnet, dass** die Schicht (13) aus Metall oder eine der Schichten (13) aus Metall dem Wirkungsbereich (2) des Lasers (3) direkt zugewandt ist.

5. Anordnung (1) nach einem der Ansprüche 1 bis 3, **dadurch gekennzeichnet, dass** der zumindest eine Mineralwollekörper (6) dem Wirkungsbereich (2) des Lasers (3) direkt zugewandt ist.

6. Anordnung (1) nach einem der Ansprüche 1 bis 5, **dadurch gekennzeichnet, dass** der Mineralwollekörper (6) Basalt aufweist.

7. Anordnung (1) nach einem der Ansprüche 1 bis 6, **dadurch gekennzeichnet, dass** die Anordnung (1) eine Laserschutzkabine ist, wobei der Wirkungsbereich (2) für den Laser (3) in einem Innenraum der Laserschutzkabine angeordnet ist.

8. Verwendung eines Mineralwollekörpers (6) zum Abschirmen von Laserstrahlen (5), wobei der Mineralwollekörper (6) zumindest eine Schicht (7) eines Schutzwandelementes (4) einer Anordnung (1) nach einem der Ansprüche 1 bis 7 bildet.

9. Verwendung eines Mineralwollekörpers (6) zum Abschirmen von Laserstrahlen (5), insbesondere nach Anspruch 8, wobei die Laserstrahlen (5) in einem Auftreffbereich (14) des Mineralwollekörpers (6) auf diesen auftreffen und der Mineralwollekörper (6) im Auftreffbereich (14) zumindest an einer Oberfläche des Mineralwollekörpers (6) von den Laserstrahlen (5) zumindest teilweise aufgeschmolzen wird.

10. Verwendung nach Anspruch 9, **dadurch gekennzeichnet, dass** eine Aufschmelztiefe (15), in der der Mineralwollekörper (6) in einem Aufschmelzvorgang von den Laserstrahlen (5) aufgeschmolzen wird, kleiner ist als die Dicke (16) des Mineralwollekörpers (6).

## Claims

1. An arrangement (1) with at least one region of action (2) for at least one laser (3) and with at least one protective wall element (4), which delimits the region of action (2) at least in regions, for absorption and/or reflection of laser beams (5), wherein the protective wall element (4) has one or more layers (7, 13), and the layer (7) or at least one of the layers (7) has at least one mineral-wool body (6) or is a mineral-wool body (6), **characterised in that** the mineral-wool body (6) is designed to be self-supporting, the mineral-wool body (6) containing pressed mineral fibres which are bound with a cured binding agent.

2. An arrangement (1) according to Claim 1, **characterised in that** the protective wall element (4) has at least two layers (7, 13), with a preferably air-filled gap (8) being arranged between the, or at least two of the, layers (7, 13).

3. An arrangement (1) according to Claim 1 or 2, **characterised in that** at least one of the layers (13) of the protective wall element (4) contains metal, or consists thereof.

4. An arrangement (1) according to Claim 3, **characterised in that** the layer (13) of metal or one of the layers (13) of metal directly faces the region of action (2) of the laser (3).

5. An arrangement (1) according to one of Claims 1 to 3, **characterised in that** the at least one mineral-wool body (6) directly faces the region of action (2) of the laser (3).

6. An arrangement (1) according to one of Claims 1 to 5, **characterised in that** the mineral-wool body (6) contains basalt.

7. An arrangement (1) according to one of Claims 1 to 6, **characterised in that** the arrangement (1) is a laser protection enclosure, the region of action (2) for the laser (3) being arranged in an interior of the laser protection enclosure.

8. Use of a mineral-wool body (6) for shielding from laser beams (5), wherein the mineral-wool body (6) forms at least one layer (7) of a protective wall element (4) of an arrangement (1) according to one of Claims 1 to 7.

9. Use of a mineral-wool body (6) for shielding from laser beams (5), in particular according to Claim 8, wherein the laser beams (5) strike the mineral-wool body (6) in an impingement region (14) thereof and the mineral-wool body (6) in the impingement region (14) is at least partially melted at least on one surface of the mineral-wool body (6) by the laser beams (5).

10. Use according to Claim 9, **characterised in that** a melting depth (15), in which the mineral-wool body (6) is melted by the laser beams (5) in a melting operation, is smaller than the thickness (16) of the mineral-wool body (6).

## Revendications

1. Dispositif (1) ayant au moins une zone d'action (2) d'au moins un laser (3) et au moins un élément de paroi de protection (4) limitant au moins par zones la zone d'action (2) pour permettre d'absorber et/ou de réfléchir les faisceaux laser (5), l'élément de paroi de protection (4) comprenant une ou plusieurs couche(s) (7, 13) et la couche ou l'une des couches (7) comprenant au moins un corps en laine minérale (6) ou étant constituée par un corps en laine minérale (6),
**caractérisé en ce que**
le corps en laine minérale (6) est autoportant et renferme des fibres minérales comprimées qui sont liées à un liant durci.

2. Dispositif (1) conforme à la revendication 1,
**caractérisé en ce que**
l'élément de paroi de protection (4) comprend au moins deux couches (7, 13) et, entre ces couches (7, 13) est installé un volume intermédiaire (8) de préférence rempli d'air.

3. Dispositif (1) conforme à la revendication 1 ou 2,
**caractérisé en ce qu'**
au moins l'une des couches (13) de l'élément de paroi de protection (4) renferme du métal ou est réalisée en métal.

4. Dispositif (1) conforme à la revendication 3,
**caractérisé en ce que**
la couche (13) en métal ou l'une des couches (13) en métal est directement tournée vers la zone d'action (2) du laser (3).

5. Dispositif (1) conforme à l'une des revendications 1 à 3,
**caractérisé en ce que**
le corps en laine minérale (6) est directement tourné vers la zone d'action (2) du laser (3).

6. Dispositif (1) conforme à l'une des revendications 1 à 5,
**caractérisé en ce que**
le corps en laine minérale (6) renferme du basalte.

7. Dispositif (1) conforme à l'une des revendications 1 à 6,
**caractérisé en ce qu'**
il est constitué par une cabine de protection anti-laser, la zone d'action (2) du laser (3) étant située dans le volume interne de la cabine de protection anti-laser.

8. Utilisation d'un corps en laine minérale (6) pour faire écran à des faisceaux laser (5), ce corps en laine minérale (6) formant au moins une couche (7) d'un élément de paroi de protection (4) d'un dispositif (1) conforme à l'une des revendications 1 à 7.

9. Utilisation d'un corps en laine minérale (6) pour faire écran à des faisceaux laser (5), en particulier conformé à la revendication 8,
selon laquelle les faisceaux laser (5) viennent frapper le corps en laine minérale (6) dans une zone de frappe (14) de celui-ci, et, dans la zone de frappe (14) le corps en laine minérale (6) est au moins partiellement fondu par les faisceaux laser (5) au moins sur une surface.

10. Utilisation conforme à la revendication 9,
**caractérisée en ce que**
la profondeur de fusion (15) du corps en laine minérale (6) par les faisceaux laser (5) dans un processus de fusion est inférieure à l'épaisseur (16) de ce corps en laine minérale (6).
